# EUROPÄISCHE PATENTSCHRIFT

(11) **EP 1 575 412 B1**
(45) Veröffentlichungstag und Bekanntmachung des Hinweises auf die Patenterteilung: **09.08.2006**
(21) Anmeldenummer: 03813557.0
(22) Anmeldetag: 04.12.2003
(51) Int. Cl.: A47L 15/42, G02B 6/42

(54) **HAUSHALTGERÄT, INSBESONDERE EINBAU-HAUSHALTGERÄT**
DOMESTIC APPLIANCE, IN PARTICULAR A BUILT-IN DOMESTIC APPLIANCE
APPAREIL MENAGER, EN PARTICULIER APPAREIL MENAGER A ENCASTRER

(30) Priorität: 19.12.2002 DE 10259764
(43) Veröffentlichungstag der Anmeldung: 21.09.2005
(73) Patentinhaber: BSH Bosch und Siemens Hausgeräte GmbH, 81739 München (DE)
(72) Erfinder: KACZMAREK, Wolfgang, 84419 Schwindegg (DE)
(86) Internationale Anmeldenummer: PCT/EP2003/013718
(87) Internationale Veröffentlichungsnummer: WO 2004/056256

(56) Entgegenhaltungen:
- EP-A- 1 251 534
- EP-A- 1 321 090
- EP-A- 1 332 708
- DE-A- 10 022 206
- GB-A- 2 044 427
- US-A- 2 737 573
- US-A- 5 974 213

## Beschreibung

Die Erfindung betrifft ein Haushaltgerät, insbesondere ein Einbau-Haushaltgerät, mit wenigstens einer optischen Betriebsanzeige, die durch wenigstens ein Abdeckelement abdeckbar ist, wobei wenigstens ein Lichtleiter an die optische Betriebsanzeige zur Übertragung wenigstens eines abgestrahlten Signallichts angekoppelt ist.

Es sind verschiedene Haushaltgeräte bekannt, wie beispielsweise Küchen-Haushaltgeräte, die im wesentlichen Herde, Kältegeräte und Geschirrspülmaschinen umfassen. Insbesondere bei Kältegeräten und bei Geschirrspülmaschinen gibt es sogenannte vollintegrierbare Haushaltgeräte, deren gesamte Frontfläche mit einer Gerätefrontverkleidung versehen ist, welche an umgebende Möbelfronten angepasst sein kann. Bei einem vollintegrierbaren Haushaltgerät besteht das Problem, dass eine optische Betriebsanzeige, bei einer geschlossenen Vordertür des vollintegrierbaren Haushaltgeräts durch die Gerätefrontverkleidung verborgen ist, so dass der Betriebszustand des vollintegrierbaren Haushaltgeräts nicht überprüfbar ist.

Aus EP 0 691 100 A1 ist ein Einbau-Haushaltgerät mit einem Gehäuse und einer Vordertür bekannt, wobei an einem oberen Rand der Vordertür eine Leuchtsignaleinrichtung vorgesehen ist, welche einen bestimmten Betriebszustand des Geräts anzeigt und welche bei geschlossener Vordertür verborgen ist. Dort sind zwischen dem oberen Rand der Vordertür und einer parallel zu diesem Rand verlaufenden Fläche Mittel vorgesehen, die ein von der Leuchtsignaleinrichtung abgestrahltes Licht in Richtung der Vorderseite der Vordertür übertragen.

In DE 100 22 206 C2 ist eine einbaufähige Geschirrspülmaschine mit einer schwenkbaren Gerätetür beschrieben, die auf ihrer oberen Stirnfläche eine optische Betriebsanzeige mit einer oder mehreren Lichtquellen aufweist, welche bei geschlossener Gerätetür von einer oben auf der Geschirrspülmaschine aufliegenden Arbeitsplatte überdeckt werden. Dort ist ein Lichtleiter mit einem an der Arbeitsplattenunterseite über der Gerätetür lagefixierten Wrasenschutzelement verbunden, welcher das Signallicht der überdeckten optischen Betriebsanzeige zur Gerätefrontseite lenkt.

Der Nachteil der in EP 0 691 100 A1 und in DE 100 22 206 C2 beschriebenen Einrichtungen besteht darin, dass das Signallicht im Lichtleiter für einen Benutzer, der vor dem Einbau-Haushaltsgerät bzw. der Geschirrspülmaschine steht schlecht sichtbar ist, da sich der Lichtleiter in einem Spalt zwischen Arbeitsplattenunterseite und Gerätetürrand befindet und von oben von der Arbeitsplatte abgedeckt wird. Insbesondere wird ein Erkennen des Signallichts bei Verwendung einer Gerätefrontverkleidung großer Stärke erschwert, da auf diese Weise der Lichtleiter zusätzlich von unten durch die Gerätefrontverkleidung abgedeckt wird.

Der Erfindung liegt die Aufgabe zugrunde, für ein Haushaltgerät, insbesondere ein Einbau-Haushaltgerät, die Sichtbarkeit des Signallichts wenigstens einer optischen Betriebsanzeige zu verbessern.

Diese Aufgabe wird bei einem Haushaltgerät der eingangs genannten Art dadurch gelöst, dass der Lichtleiter derart ausgebildet ist, dass sein Lichtleitweg an die Stärke des Abdeckelements anpassbar ist.

Dadurch dass der Lichtleitweg des Lichtleiters an die Stärke des Abdeckelements anpassbar ist, wird auf einfache Weise die Sichtbarkeit des vom Lichtleiter übertragenen Signallichts für einen Benutzer sichergestellt, da auch bei Abdeckelementen besonderer Stärke ein genügend großer Bereich des Lichtleiters frei sichtbar bleibt.

Nach einer bevorzugten Ausführungsform der Erfindung ist zur Anpassung des Lichtleitweges an die Stärke des Abdeckelements der Lichtleiter relativ zur optischen Betriebsanzeige verschiebbar.

Nach einer weiteren bevorzugten Ausführungsform der Erfindung ist zur Anpassung des Lichtleitweges an die Stärke des Abdeckelements bei dem Lichtleiter eine Überstandslänge vorgesehen, um die der Lichtleiter relativ zum Abdeckelement verschiebbar ist. Mit dieser Maßnahme wird der Vorteil erzielt, dass nur ein Lichtleiter einer einzigen Länge und nicht Lichtleiter verschiedener Länge zusammen mit dem Haushaltgerät ausgeliefert werden müssen, die ansonsten nötig wären, um dem Benutzer eine Auswahl des Lichtleiters zu ermöglichen, der die passende Länge zu dem von ihm verwendeten Abdeckelement aufweist. Auf diese Art und Weise vereinfacht sich auch die Lagerhaltung für das Haushaltgerät, da nur Lichtleiter eines Typs vorrätig zu halten sind und nicht Lichtleiter unterschiedlicher Längen.

In einer nächsten Weiterbildung ist die optische Betriebsanzeige derart ausgebildet, dass zumindest die Betriebszustände des ein- und/oder ausgeschalteten Haushaltgeräts signalisierbar sind.

Dadurch kann bei geschlossener Vordertür des Haushaltgeräts zumindest festgestellt werden, ob das Haushaltgerät ein- oder ausgeschaltet ist. Dies ist besonders bei Geschirrspülmaschinen vorteilhaft, da ein versehentliches Öffnen der Vordertür im eingeschalteten Zustand dazu führen kann, dass Wasser austritt.

Nach einer vorteilhaften Ausführungsform der Erfindung ist die optische Betriebsanzeige derart ausgebildet, dass für unterschiedliche Betriebszustände Signallicht unterschiedlicher Farbe abstrahlbar ist. Auf diese Weise kann für eine Übertragung des Signallichts der unterschiedlichen Betriebszustände derselbe Lichtleiter verwendet werden, da die unterschiedlichen Betriebszustände aufgrund der unterschiedlichen Farben des Signallichts unterschieden werden können.

Weitere Merkmale der Erfindung und vorteilhafte Ausführungsformen der Erfindung sind in den Unteransprüchen gekennzeichnet.

Mit der Erfindung ist bei einem Haushaltgerät, insbesondere bei einem Einbau-Haushaltgerät, die Sichtbarkeit des Signallichts wenigstens einer optischen Betriebsanzeige wesentlich verbessert.

Die Erfindung und ihre Weiterbildungen werden nachfolgend anhand von Zeichnungen näher erläutert:

Es zeigen
- Figur 1: eine schematische Seitenansicht eines Haushaltgeräts mit einer Arbeitsplatte und einer Gerätefrontverkleidung als Abdeckelemente,
- Figur 2: eine schematische Schnittdarstellung eines Teils des Haushaltgeräts nach Figur 1 zur Veranschaulichung einer Anpassung eines Lichtleitweges an unterschiedliche Stärken der Gerätefrontverkleidung,
- Figur 3: eine schematische Draufsicht eines Teils des Haushaltgeräts nach Figur 2,
- Figur 4: eine schematische Schnittdarstellung eines Teils des Haushaltgeräts nach Figur 1 zur Veranschaulichung einer Position eines Lichtleiters, wenn eine Vordertür des Haushaltgeräts die optische Betriebsanzeige umfasst,
- Figur 5: eine schematische Schnittdarstellung eines Teils des Haushaltgeräts nach Figur 1 zur Veranschaulichung einer Position eines Lichtleiters, wenn das Gehäuse des Haushaltgeräts die optische Betriebsanzeige umfasst und
- Figur 6: eine schematische Schnittdarstellung eines Teils des Haushaltgeräts nach Figur 1 mit einer Gerätefrontverkleidung, die einen Lichtleiter mit einer Überstandslänge zur Anpassung des Lichtleitweges umfasst.

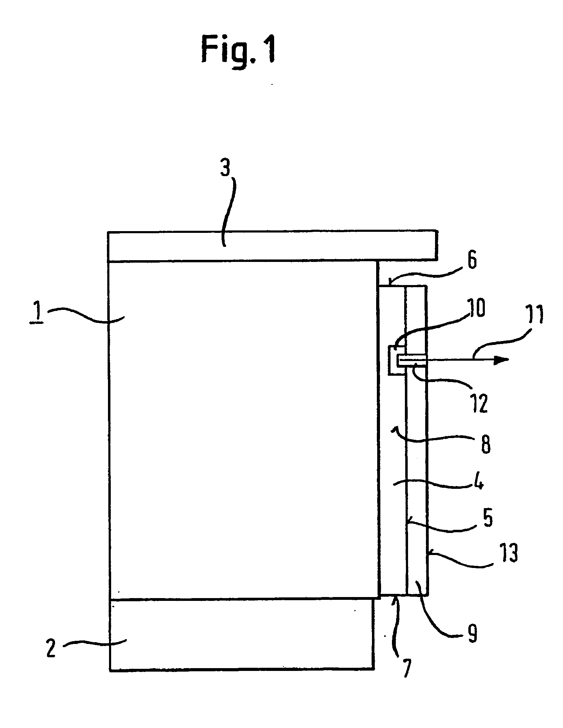

Das in Figur 1 in einer schematischen Seitenansicht gezeigte Haushaltgerät 1, welches insbesondere eine Geschirrspülmaschine oder ein Kühlgerät ist, ruht auf einem Sockel 2 und wird von einer Arbeitsplatte 3 abgedeckt. Das Haushaltgerät 1 umfasst eine Vordertür 4 mit einer Frontfläche 5, einem oberen Rand 6, einem unteren Rand 7 und seitlichen Rändern 8. An der Frontfläche 5 der Vordertür 4 ist als Abdeckelement eine Gerätefrontverkleidung 9, die eine sogenannte Möbelplatte sein kann, angebracht.

Von der optischen Betriebsanzeige 10, die sich an dem seitlichen Rand 8 der Vordertür 4 befindet, wird das Signallicht 11 abgestrahlt und mit Hilfe des Lichtleiters 12 an die Vorderseite 13 der Gerätefrontverkleidung 9 übertragen, so dass der Betriebszustand des Haushaltgeräts 1 auch bei geschlossener Vordertür 4 überprüfbar ist.

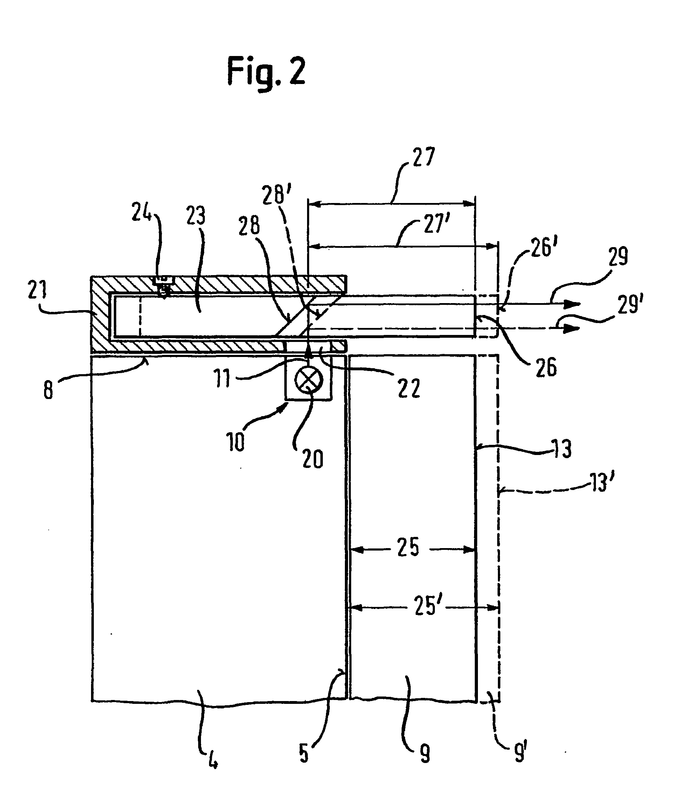

In Figur 2 ist die eine Anpassung eines Lichtleitweges an unterschiedliche Stärken der Gerätefrontverkleidung veranschaulicht.

Der seitliche Rand 8 der Vordertür 4 des Haushaltgeräts 1 umfasst eine optische Betriebsanzeige 10 mit einer Leuchtdiode 20, die ein Signallicht 11 in Richtung senkrecht zu dem seitlichen Rand 8 abstrahlt. Auf dem seitlichen Rand 8 ist als Fixiervorrichtung ein Bügel 21 montiert, mit einer Aussparung 22 an der Position der optischen Betriebsanzeige 10. Der Bügel 21 umfasst einen Lichtleiter 23, in den das Signallicht 11 durch die Aussparung 22 hindurch einkoppelt. Dieser Lichtleiter 23 ist in dem Bügel 21 parallel zu dem seitlichen Rand 8 relativ zur optischen Betriebsanzeige 10 verschiebbar und mit einer Senkkopfschraube 24 in dem Bügel 21 fixierbar.

Für eine Gerätefrontverkleidung 9 mit einer Stärke 25, wird der Lichtleiter 23 so verschoben, dass seine Stimfläche in einer Position 26 mit der Vorderseite 13 der Gerätefrontverkleidung 9 abschließt. Auf diese Weise wird der Lichtleitweg 27 an die Stärke 25 der Gerätefrontverkleidung 9 angepasst. Für eine Gerätefrontverkleidung 9' mit einer Stärke 25', wird der Lichtleiter 23 so verschoben, dass seine Stirnfläche an einer Position 26' mit der Vorderseite 13' der Gerätefrontverkleidung 9' abschließt. Auf diese Weise wird der Lichtleitweg 27' an die Stärke 25' der Gerätefrontverkleidung 9' angepasst.

Weiterhin umfasst der Lichtleiter 23 eine schräge lichtreflektierende Fläche, die sich je nach Stärke 25 oder 25' der Gerätefrontverkleidung 9 oder 9' an der Position 28 bzw. 28' befindet. Auf diese Weise ist für verschiedene Stärken 25 bzw. 25' der Gerätefrontverkleidung 9 bzw. 9' gewährleistet, dass das reflektierte Signallicht 29 bzw. 29' rechtwinklig in Richtung der Vorderseite 13 bzw. 13' der Gerätefrontverkleidung 9 bzw. 9' reflektiert wird und dort gut sichtbar ist.

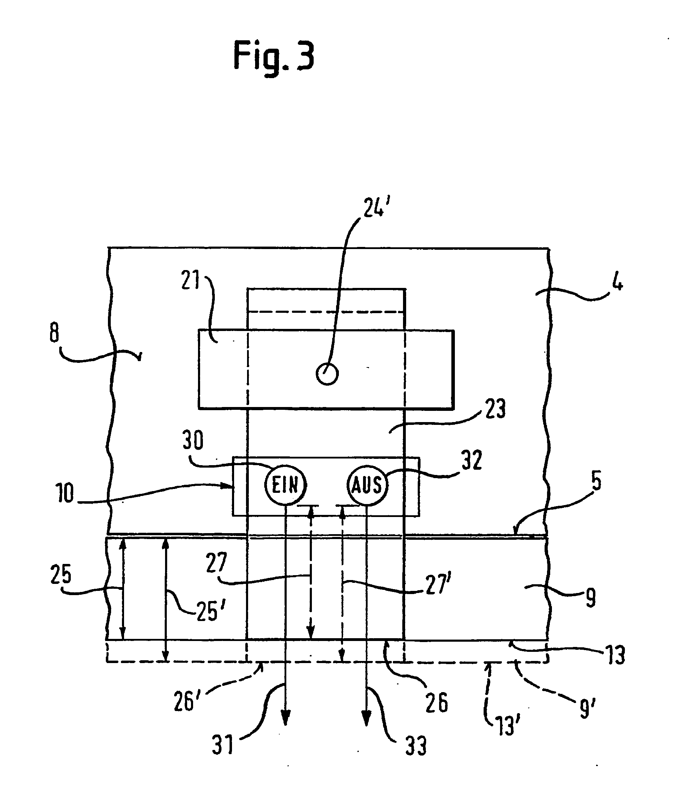

In der Draufsicht in Figur 3 ist der seitliche Rand 8 der Vordertür 4 des Haushaltgeräts 1 zu erkennen, der die optische Betriebsanzeige 10 umfasst, mit einer roten Leuchtdiode 30, die ein rotes Signallicht 31 abstrahlt und im gezeigten Ausführungsbeispiel den Betriebszustand EIN signalisiert und mit einer grünen Leuchtdiode 32, die ein grünes Signallicht 33 abstrahlt und im gezeigten Ausführungsbeispiel den Betriebszustand AUS signalisiert.

Das von den Leuchtdioden 30 und 32 abgestrahlte Signallicht 31 und 33 koppelt wie in Figur 2 beschrieben in den scheibenförmigen Lichtleiter 23 ein und wird von diesem bis zur Vorderseite 13 bzw. 13' der Gerätefrontverkleidung 9 bzw. 9' geleitet. Die Anpassung des Lichtleitweges 27 bzw. 27' des verschiebbaren Lichtleiters 23 an die verschiedenen Stärken 25 bzw. 25' der Gerätefrontverkleidung 9 bzw. 9' erfolgt wie in Figur 2 beschrieben. An der Vorderseite 13 bzw. 13' der Gerätefrontverkleidung 9 bzw. 9' ist dann je nach Betriebszustand EIN oder AUS das Signallicht 31 oder das Signallicht 33 sichtbar.

Auf diese Weise kann bei geschlossener Vordertür 4 des Haushaltgeräts 1 von einem Benutzer zumindest festgestellt werden, ob das Haushaltgerät 1 ein- oder ausgeschaltet ist. Dies ist besonders vorteilhaft, wenn das Haushaltgerät 1 eine Geschirrspülmaschine ist, da ein versehentliches Öffnen der Vordertür 4 im eingeschalteten Betriebszustand EIN in diesem Fall dazu führen kann, dass Wasser austritt.

Durch die Verwendung von Leuchtdioden 30, 32 unterschiedlicher Farbe kann für die Signalisierung der unterschiedlichen Betriebszustände EIN, AUS derselbe Lichtleiter 23 verwendet werden, da die unterschiedlichen Betriebszustände EIN, AUS aufgrund der unterschiedlichen Farben des Signallichts 31, 33 unterschieden werden können. Insbesondere kann die optische Betriebsanzeige 10 für die Anzeige mehrerer Betriebszustände mehrere Leuchtdioden mit verschiedenen Farben umfassen. Auch für die Betriebszustände EIN und AUS ist eine Farbauswahl nicht auf rot und grün beschränkt. Statt Leuchtdioden können auch andere Leuchtmittel, wie beispielsweise Glühbirnen verwendet werden.

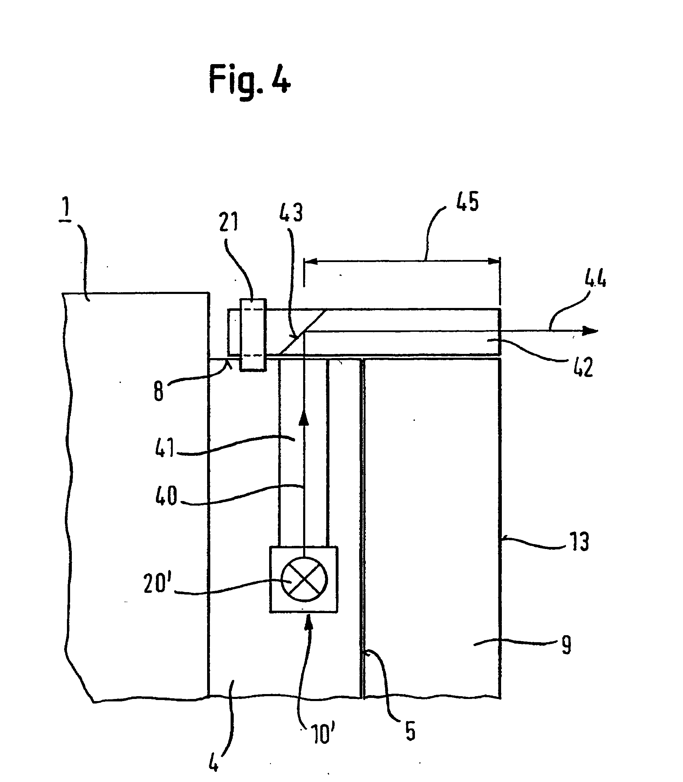

In Figur 4 ist eine weitere Ausführungsform der Erfindung gezeigt, bei der eine Vordertür 4 des Haushaltgeräts 1 die optische Betriebsanzeige umfasst. Die Vordertür 4 des Haushaltgeräts 1 umfasst außerhalb der Ränder 6, 7, 8 eine optische Betriebsanzeige 10' mit einer Leuchtdiode 20', die ein Signallicht 40 in Richtung des seitlichen Randes 8 der Vordertür 4 abstrahlt. An der optischen Betriebsanzeige 10' ist ein erster Teil des Lichtleiters 41 bündig derart angeordnet ist, dass das Signallicht 40 von der optischen Betriebsanzeige 10' bis zu dem seitlichen Rand 8 der Vordertür 4 übertragbar ist. Dieser erste Teil des Lichtleiters 41 kann auch aus einem Bündel Glas- oder Kunststofffasern bestehen.

Auf dem seitlichen Rand 8 der Vordertür 4 ist ein zweiter Teil des Lichtleiters 42 in einem Rechtenwinkel zu dem ersten Teil des Lichtleiters 41 verschiebbar angeordnet. Dieser zweite Teil des Lichtleiters 42 umfasst eine schräge lichtreflektierende Fläche 43, so dass das Signallicht 40 von dieser Fläche 43 in Richtung der Vorderseite 13 der Gerätefrontverkleidung 9 reflektiert wird. Der zweite Teil des Lichtleiters 42 leitet das reflektierte Signallicht 44 über die Gerätefrontverkleidung 9 hinweg, so dass das reflektierte Signallicht 44 an der Vorderseite 13 der Gerätefrontverkleidung 9 sichtbar ist.

Der zweite Teil des Lichtleiters 42 ist relativ zu dem ersten Teil des Lichtleiters 41 verschiebbar, um wie in Figur 2 beschrieben, die Anpassung des Lichtleitweges 45 an unterschiedliche Stärken der Gerätefrontverkleidung 9 zu ermöglichen. Dadurch wird sichergestellt, dass ein genügend großer Bereich des zweiten Teils des Lichtleiters 42 für den Benutzer sichtbar ist, so dass das Signallicht 44 gut erkannt werden kann.

Strahlt die optische Betriebsanzeige 10' das Signallicht 40 in Richtung auf den unteren Rand 7 oder den oberen Rand 6 der Vordertür 4 ab, so ist die oben beschriebene Anordnung des ersten Teils des Lichtleiters 41 und des zweiten Teils des Lichtleiters 42 auch an dem unteren Rand 7 bzw. oberen Rand 6 der Vordertür 4 vorsehbar. Insbesondere kann der erste Teil des Lichtleiters 41 entweder aus einem starren stab- oder zylinderförmigen Lichtleiter oder aber aus einem Bündel von Glasfaser bzw. Kunststofffasem bestehen. Da die Fasern biegsam sind, kann der erste Teil des Lichtleiters 41 in diesem Fall gekrümmt werden, wodurch das Signallicht 40 auch von Positionen der optischen Betriebsanzeige 10' an die Ränder 6, 7, 8 geleitet werden kann, die mit starren Lichtleitern 41 schwer zugänglich sind.

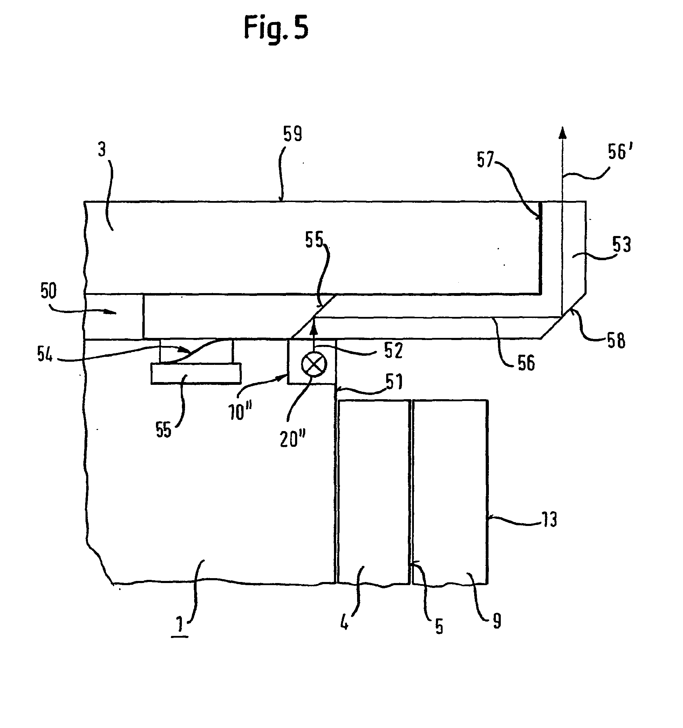

In Figur 5 ist eine weitere Ausführungsform der Erfindung gezeigt, bei der eine Gehäuse 50 des Haushaltgeräts 1 die optische Betriebsanzeige umfasst. Das Gehäuse 50 des Haushaltgeräts 1 umfasst an der Vorderseite 51 des Haushaltgeräts 1 unterhalb der Arbeitsplatte 3 eine optische Betriebsanzeige 10" mit einer Leuchtdiode 20", die ein Signallicht 52 in Richtung der Arbeitsplatte 3 abstrahlt. Unterhalb der Arbeitsplatte 3 befindet sich ein parallel zur Arbeitsplatte 3 verschiebbarer Lichtleiter 53 mit dem der Lichtleitweg, anlog zu Figur 2, an die Breite der Arbeitsplatte 3 angepasst werden kann. Mit der Klemme 54 der Fixiervorrichtung 55 wird der verschiebbare Lichtleiter 53 in der gewählten Position fixiert.

Das von der optischen Betriebsanzeige 10" abgestrahlte Signallicht 52 koppelt quer in den verschiebbaren Lichtleiter 53 ein, wird dort an einer ersten schrägen lichtreflektierenden Fläche 55 in einem rechten Winkel reflektiert, so dass sich das reflektierte Signallicht 56 parallel zur Arbeitsplatte 3 im verschiebbaren Lichtleiter 53 ausbreitet. Das reflektierte Signallicht 56 wird von dem verschiebbaren Lichtleiter 53 über die Vordertür 4 des Haushaltgeräts 1 und über die Gerätefrontverkleidung 9 hinweg in Richtung Vorderseite 13 der Gerätefrontverkleidung 9 geleitet. Der Lichtleiter 53 umfasst die Arbeitsplatte 3 an deren Stimfläche 57 in einem rechten Winkel derart, dass das reflektierte Signallicht 56 an einer zweiten schrägen lichtreflektierenden Fläche 58 des Lichtleiters 53 senkrecht zur Oberfläche 59 der Arbeitsplatte 3 reflektiert wird, so dass das doppelt reflektierte Signallicht 56' gut sichtbar ist.

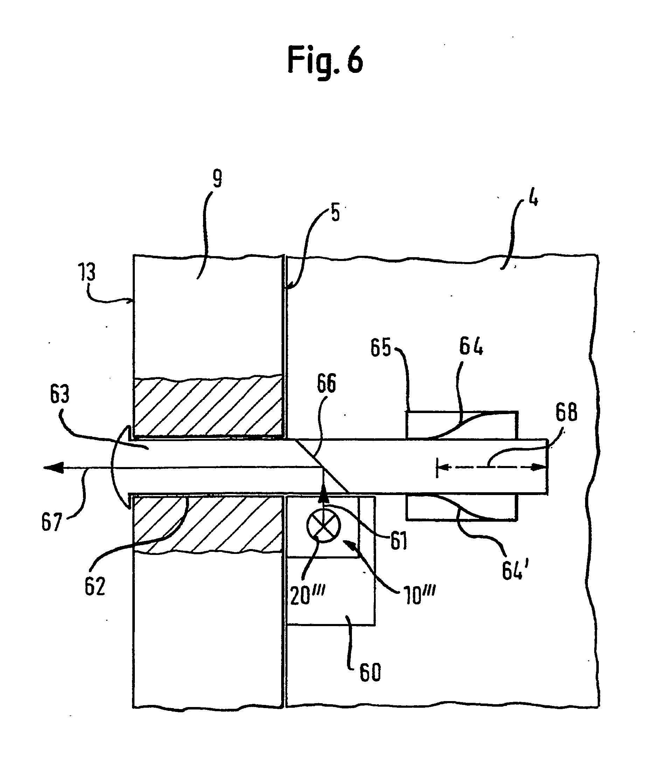

In Figur 6 ist eine weitere Ausführungsform der Erfindung gezeigt, bei der eine Gerätefrontverkleidung 9 einen Lichtleiter 63 mit einer Überstandslänge 68 zur Anpassung des Lichtleitweges umfasst. Die Vordertür 4 des Haushaltgeräts 1 umfasst an ihrer Frontfläche 5 hinter der Gerätefrontverkleidung 9 eine Steuerung 60 mit einer optischen Betriebsanzeige 10''', die ihrerseits eine Leuchtdiode 20''' umfasst, die ein Signallicht 61 abstrahlt. Die Gerätefrontverkleidung 9 weist an der Position der optischen Betriebsanzeige 10''' als Durchgangsöffnung eine bis zur Vorderseite 13 der Gerätefrontverkleidung 9 durchgängige Bohrung 62 auf, die insbesondere zylinderförmig ausgeführt ist und die den verschiebbaren Lichtleiter 63 umfasst.

Der verschiebbaren Lichtleiter 63 ist durch zwei Klemmen 64 und 64' der Fixiervorrichtung 65 bündig an der optischen Betriebsanzeige 10''' fixiert. Das von der Leuchtdiode 20''' abgestrahlte Signallicht 61 kann auf diese Weise direkt in den Lichtleiter 63 einkoppeln, wird an der lichtreflektierenden Fläche 66 in Richtung der Vorderseite 13 der Gerätefrontverkleidung 9 reflektiert und wird durch den Lichtleiter 63 an die Vorderseite 13 der Gerätefrontverkleidung 9 geleitet, so dass das reflektierte Signallicht 67 dort sichtbar ist.

Ein Vorteil dieser Ausführung besteht darin, dass auch hier die Länge des Lichtleitweges an die Stärke der Gerätefrontverkleidung 9 anpassbar ist, da der Lichtleiter 63 über eine entsprechende Überstandslänge 68 verfügt, um die er relativ zur Gerätefrontverkleidung 9 verschiebbar ist. Darüber hinaus kann der Lichtleiter 63 einfach durch ein Stück zylinderförmiges Glas oder Kunststoff gebildet sein, wodurch der Lichtleiter 63 sehr kostengünstig ist.

Sind an der Vordertür 4 des Haushaltgeräts 1 mehrere optische Betriebsanzeigen 10"' vorhanden oder umfasst die optische Betriebsanzeige mehrere Leuchtdioden 20"', um verschiedene Betriebszustände zu signalisieren, so kann die oben beschriebene Ausführung mehrfach vorhanden sein. Auf diese Weise können mehrere verschiebbare Lichtleiter 63 zur Übertragung von zu unterschiedlichen Betriebszuständen gehörendem Signallicht vorgesehen sein. Insbesondere können diese verschiebbaren Lichtleiter 63 zur Unterscheidung der verschiedenen Betriebszustände in unterschiedlichen Farben ausgestaltet sein. Darüber hinaus kann die Bohrung 62 auch so ausgestaltet sein, dass sie mehrere Lichtleiter 63 umfasst, die nebeneinander und/oder untereinander angeordnet sind.

Mit der Erfindung ist bei einem Haushaltgerät 1, insbesondere bei einem Einbau-Haushaltgerät, die Sichtbarkeit des Signallichts wenigstens einer optischen Betriebsanzeige 10 wesentlichverbessert.

## Patentansprüche

1. Haushaltgerät, insbesondere Einbau-Haushaltgerät, mit wenigstens einer optischen Betriebsanzeige, die durch wenigstens ein Abdeckelement abdeckbar ist, wobei wenigstens ein Lichtleiter an die optische Betriebsanzeige zur Übertragung wenigstens eines abgestrahlten Signallichts angekoppelt ist, wobei der Lichtleiter (12, 23) derart ausgebildet ist, dass sein Lichtleitweg (27, 27') an die Stärke des Abdeckelements (3, 9) anpassbar ist **dadurch gekennzeichnet, dass** der Lichtleiter (23) aus wenigstens zwei Teilen derart zusammengesetzt ist, das zur Anpassung des Lichtleitweges (27, 27') der zweite Teil des Lichtleiters (42) relativ zu dem ersten Teil des Lichtleiters (41) verschiebbar ist.

2. Haushakgerät nach Anspruch 1, **dadurch gekennzeichnet, dass** zur Anpassung des Lichtleitweges (27, 27') der Lichtleiter (23) relativ zur optischen Betriebsanzeige (10) verschiebbar ist.

3. Haushaltgerät nach Anspruch 1, **dadurch gekennzeichnet, dass** zur Anpassung des Lichtleitweges (27, 27') bei dem Lichtleiter (23, 63) eine Überstandslänge (68) vorgesehen ist, um die der Lichtleiter (23, 63) relativ zum Abdeckelement (3, 9) verschiebbar ist.

4. Haushaltgerät nach Anspruch 2 oder 3, **dadurch gekennzeichnet, dass** eine Fixiervorrichtung (21) vorgesehen ist, mit der der Lichtleiter (23, 42) in einer vorgebbaren Verschiebeposition fixierbar ist.

5. Haushaltgerät nach einem der vorangehenden Ansprüche, **dadurch gekennzeichnet, dass** das Abdeckelement durch eine Vordertür (4) und/oder einer davor angeordneten Gerätefrontverkleidung (9) und/oder eine Arbeitsplatte (3) gebildet ist.

6. Haushaltgerät nach einem der vorangehenden Ansprüche, **dadurch gekennzeichnet, dass** der Lichtleiter (23, 42) in wenigstens einem der Randbereiche (6, 7, 8) des Abdeckelements (4, 9) angeordnet ist.

7. Haushaltgerät nach einem der vorangehenden Ansprüche, **dadurch gekennzeichnet, dass** der Lichtleiter (23, 42) außerhalb des oberen Randbereichs (6) des Abdeckelements (4, 9) angeordnet ist.

8. Haushaltgerät nach Anspruch 1 bis 5, **dadurch gekennzeichnet, dass** der Ankoppelort des Lichtleiters (63, 41) an die optische Betriebsanzeige (10', 10''') hinter dem Abdeckelement (9) angeordnet ist.

9. Haushaltgerät nach Anspruch 8, **dadurch gekennzeichnet, dass** im Abdeckelement (9) wenigstens eine Durchgangsöffnung (62) vorgesehen ist, die wenigstens einen Lichtleiter (63) umfasst.

10. Haushaltgerät nach Anspruch 1 bis 5, **dadurch gekennzeichnet, dass** der Ankoppelort des Lichtleiters (53) an die optische Betriebsanzeige (10") innerhalb des Gehäuses (50) des Haushaltgeräts (1) angeordnet ist.

11. Haushaltgerät nach einem der vorangehenden Ansprüche, **dadurch gekennzeichnet, dass** der Lichtleiter (23, 41, 42, 63) stab-, scheiben- oder zylinderförmig ausgebildet ist.

12. Haushaltgerät nach einem der vorangehenden Ansprüche, **dadurch gekennzeichnet, dass** der Lichtleiter (23, 41, 42, 63) starr oder biegsam ausgebildet ist.

13. Haushaltgerät nach einem der vorangehenden Ansprüche, **dadurch gekennzeichnet, dass** der Lichtleiter (23, 42, 63) derart angeordnet ist, dass das Signallicht (11, 31, 33, 44, 67) auf die Vorderseite des Abdeckelements (13) übertragbar ist.

14. Haushaltgerät nach einem der vorangehenden Ansprüche, **dadurch gekennzeichnet, dass** der Lichtleiter (23, 41, 42, 63) wenigstens eine Glasfaser umfasst.

15. Haushaltgerät nach einem der vorangehenden Ansprüche, **dadurch gekennzeichnet, dass** das der Lichtleiter (23, 41, 42, 63) wenigstens eine Kunststofffaser umfasst.

16. Haushaltgerät nach einem der vorangehenden Ansprüche, **dadurch gekennzeichnet, dass** die optische Betriebsanzeige (10) derart ausgebildet ist, dass zumindest die Betriebszustände (EIN, AUS) des ein- und/oder ausgeschalteten Haushaltgeräts (1) signalisierbar sind.

17. Haushaltgerät nach einem der vorangehenden Ansprüche, **dadurch gekennzeichnet, dass** die optische Betriebsanzeige (10) zumindest eine Leuchtdiode (20) umfasst.

18. Haushaltgerät nach einem der vorangehenden Ansprüche, **dadurch gekennzeichnet, dass** die optische Betriebsanzeige (10) derart ausgebildet ist, dass für unterschiedliche Betriebszustände (EIN, AUS) Signallicht (31, 33) unterschiedlicher Farbe abstrahlbar ist.

19. Haushaltgerät nach einem der vorangehenden Ansprüche, **dadurch gekennzeichnet, dass** mehrere Lichtleiter (63) zur Übertragung von zu unterschiedlichen Betriebszuständen (EIN, AUS) gehörendem Signallicht (61, 31, 33) vorgesehen sind.

20. Haushaltgerät nach einem der vorangehenden Ansprüche, **dadurch gekennzeichnet, dass** zum Anzeigen unterschiedlicher Betriebszustände (EIN, AUS) Lichtleiter (63) unterschiedlicher Farbe vorgesehen sind.

21. Haushaltgerät nach einem der vorhergehenden Ansprüche, **dadurch gekennzeichnet, dass** das Haushaltgerät (1) eine Geschirrspülmaschine ist.

## Claims

1. Domestic appliance, particularly built-in domestic appliance, with at least one optical operating display which can be covered by at least one cover element, wherein at least one optical waveguide is coupled to the optical operating display for transmission of at least one radiated signal light, wherein the optical waveguide (12, 23) is constructed in such a manner that its optical path (27, 27') is adaptable to the thickness of the cover element (3, 9), **characterised in that** the optical waveguide (23) is composed of at least two parts in such a manner that for adaptation of the optical path (27, 27') the second part (42) of the optical waveguide is displaceable relative to the first part (41) of the optical waveguide.

2. Domestic appliance according to claim 1, **characterised in that** for adaptation of the optical path (27, 27') the optical waveguide (23) is displaceable relative to the optical operating display (10).

3. Domestic appliance according to claim 1, **characterised in that** for adaptation of the optical path (27, 27') there is provided at the optical waveguide (23, 63) an excess length (68) by which the optical waveguide (23, 63) is displaceable relative to the cover element (3, 9).

4. Domestic appliance according to claim 2 or 3, **characterised in that** a fixing device (21) by which the optical waveguide (23, 42) is fixable in a predeterminable displacement position is provided.

5. Domestic appliance according to one of the preceding claims, **characterised in that** the cover element is formed by a front door (4) and/or an apparatus front cladding (9) arranged in front thereof and/or a worktop (3).

6. Domestic appliance according to one of the preceding claims, **characterised in that** the optical waveguide (23, 42) is arranged in at least one of the edge regions (6, 7, 8) of the cover element (4, 9).

7. Domestic appliance according to one of the preceding claims, **characterised in that** the optical waveguide (23, 42) is arranged outside the upper edge region (6) of the cover element (4, 9).

8. Domestic appliance according to claim 1 to 5, **characterised in that** the coupling location of the optical waveguide (63, 41) to the operating display (10', 10"') is arranged behind the cover element (9).

9. Domestic appliance according to claim 8, **characterised in that** at least one passage opening (52), which comprises at least one optical waveguide (63), is provided in the cover element (9).

10. Domestic appliance according to claim 1 to 5, **characterised in that** the coupling location of the optical waveguide (53) to the optical operating display (10") is arranged within the housing (50) of the domestic appliance (1).

11. Domestic appliance according to one of the preceding claims, **characterised in that** the optical waveguide (23, 41, 42, 63) is of rod-shaped, disc-shaped or cylindrical construction.

12. Domestic appliance according to one of the preceding claims, **characterised in that** the optical waveguide (23, 41, 42, 63) is constructed to be rigid or flexible.

13. Domestic appliance according to one of the preceding claims, **characterised in that** the optical waveguide (23, 42, 63) is arranged in such a manner that the signal light (11, 31, 33, 44, 67) is transmissible to the front side of the cover element (13).

14. Domestic appliance according to one of the preceding claims, **characterised in that** the optical waveguide (23, 41, 42, 63) comprises at least one glass fibre.

15. Domestic appliance according to one of the preceding claims, **characterised in that** the optical waveguide (23, 41, 42, 63) comprises at least one synthetic material fibre.

16. Domestic appliance according to one of the preceding claims, **characterised in that** the optical operating display (10) is constructed in such a manner that at least the operational states (ON, OFF) of the switched-on and/or switched-off domestic appliance (1) can be signalled.

17. Domestic appliance according to one of the preceding claims, **characterised in that** the optical operating display (10) comprises at least one light-emitting diode (20).

18. Domestic appliance according to one of the preceding claims, **characterised in that** the optical operating display (10) is constructed in such a manner that signal light (31, 33) of different colour can be radiated for different operational states (ON, OFF).

19. Domestic appliance according to one of the preceding claims, **characterised in that** several optical waveguides (63) for transmission of signal light (61, 31, 33) belonging to different operational states (ON, OFF) are provided.

20. Domestic appliance according to one of the preceding claims, **characterised in that** optical conductors (63) of different colour are provided for the display of different operational states (ON, OFF).

21. Domestic appliance according to one of the preceding claims, **characterised in that** the domestic appliance (1) is a dishwashing machine.

## Revendications

1. Appareil ménager, en particulier appareil ménager à encastrer, avec au moins un indicateur de fonctionnement optique qui peut être recouvert par au moins un élément de recouvrement, un conducteur de lumière étant couplé à l'indicateur de fonctionnement optique pour transmettre au moins une lumière de signal rayonnée, le conducteur de lumière (12, 13) étant conçu de manière telle que son trajet guide de lumière (27, 27') peut être adapté à l'épaisseur de l'élément de recouvrement (3, 9), **caractérisé en ce que** le conducteur de lumière (23) est composé d'au moins deux parties de manière telle que pour l'adaptation du trajet guide de lumière (27, 27') la deuxième partie du conducteur de lumière (42) est déplaçable relativement à la première partie du conducteur de lumière (41).

2. Appareil ménager selon la revendication 1, **caractérisé en ce que** pour l'adaptation du trajet guide de lumière (27, 27'), le conducteur de lumière (23) est déplaçable relativement à l'indicateur de fonctionnement optique (10).

3. Appareil ménager selon la revendication 1, **caractérisé en ce que** pour l'adaptation du trajet guide de lumière (27, 27'), le conducteur de lumière (23, 63) dispose d'une longueur de saillie (68) selon laquelle le conducteur de lumière (23, 63) est déplaçable relativement à l'élément de recouvrement (3, 9).

4. Appareil ménager selon la revendication 2 ou 3, **caractérisé en ce qu'**un dispositif de fixation (21) est prévu avec lequel le conducteur de lumière (23, 42) peut être fixé dans une position de déplacement pouvant être prédéterminée.

5. Appareil ménager selon l'une des revendications précédentes, **caractérisé en ce que** l'élément de recouvrement est formé par une porte avant (4) et/ou un revêtement frontal d'appareil (9) disposé devant et/ou une plaque de travail (3).

6. Appareil ménager selon l'une des revendications précédentes, **caractérisé en ce que** le conducteur de lumière (23, 42) est disposé dans au moins une des zones marginales (6, 7, 8) de l'élément de recouvrement (4, 9).

7. Appareil ménager selon l'une des revendications précédentes, **caractérisé en ce que** le conducteur de lumière (23, 42) est disposé à l'extérieur de la zone marginale supérieure (6) de l'élément de recouvrement (4, 9).

8. Appareil ménager selon les revendications 1 à 5, **caractérisé en ce que** l'endroit d'accouplement du conducteur de lumière (63, 41) est disposé sur l'indicateur de fonctionnement optique (10', 10''') derrière l'élément de recouvrement (9).

9. Appareil ménager selon la revendication 8, **caractérisé en ce que** dans l'élément de recouvrement (9) au moins une ouverture de passage (62) est prévue qui comprend au moins un conducteur de lumière (63).

10. Appareil ménager selon les revendications 1 à 5, **caractérisé en ce que** l'endroit d'accouplement du conducteur de lumière (53) est disposé sur l'indicateur de fonctionnement optique (10") à l'intérieur du corps (50) de l'appareil ménager (1).

11. Appareil ménager selon l'une des revendications précédentes, **caractérisé en ce que** le conducteur de lumière (23, 41, 42, 63) est conçu en forme de barre, de disque ou de cylindre.

12. Appareil ménager selon l'une des revendications précédentes, **caractérisé en ce que** le conducteur de lumière (23, 41, 42, 63) est conçu rigide ou souple.

13. Appareil ménager selon l'une des revendications précédentes, **caractérisé en ce que** le conducteur de lumière (23, 42, 63) est disposé de manière telle que la lumière de signal (11, 31, 33, 44, 67) peut être transmise sur le côté avant de l'élément de recouvrement (13).

14. Appareil ménager selon l'une des revendications précédentes, **caractérisé en ce que** le conducteur de lumière (23, 41, 42, 63) comprend au moins une fibre de verre.

15. Appareil ménager selon l'une des revendications précédentes, **caractérisé en ce que** le conducteur de lumière (23, 41, 42, 63) comprend au moins une fibre synthétique.

16. Appareil ménager selon l'une des revendications précédentes, **caractérisé en ce que** l'indicateur de fonctionnement optique (10) est conçu de manière telle que au moins les états de fonctionnement (MARCHE, ARRÊT) de l'appareil ménager mis sous tension et/ou hors tension (1) peuvent être signalés.

17. Appareil ménager selon l'une des revendications précédentes, **caractérisé en ce que** l'indicateur de fonctionnement optique (10) comprend au moins une diode lumineuse (20).

18. Appareil ménager selon l'une des revendications précédentes, **caractérisé en ce que** l'indicateur de fonctionnement optique (10) est conçu de manière telle que pour différents états de fonctionnement (MARCHE, ARRÊT) une lumière de signal (31, 33) de couleur différente peut être rayonnée.

19. Appareil ménager selon l'une des revendications précédentes, **caractérisé en ce que** plusieurs conducteurs de lumière (63) sont prévus pour la transmission d'une lumière de signal (61, 31, 33) appartenant à différents états de fonctionnement (MARCHE, ARRÊT).

20. Appareil ménager selon l'une des revendications précédentes, **caractérisé en ce que** pour indiquer divers états de fonctionnement (MARCHE, ARRÊT) des conducteurs de lumière (63) de couleur différente sont prévus.

21. Appareil ménager selon l'une des revendications précédentes, **caractérisé en ce que** l'appareil ménager (1) est un lave-vaisselle.
